Europäisches Patentamt

European Patent Office

Office européen des brevets

(11) Publication number: **0 163 177 B1**

# EUROPEAN PATENT SPECIFICATION

(45) Date of publication of patent specification: **30.12.92**  (51) Int. Cl.⁵: **G09G 1/16**

(21) Application number: **85105721.6**

(22) Date of filing: **10.05.85**

(54) **Window borderline generating circuit for CRT display.**

(30) Priority: **22.05.84 JP 101885/84**

(43) Date of publication of application:
**04.12.85 Bulletin 85/49**

(45) Publication of the grant of the patent:
**30.12.92 Bulletin 92/53**

(84) Designated Contracting States:
**DE FR GB IT**

(56) References cited:
**DE-A- 3 027 272**
**DE-A- 3 305 710**

(73) Proprietor: **International Business Machines Corporation**
**Old Orchard Road**
**Armonk, N.Y. 10504(US)**

(72) Inventor: **Gohda, Yuji Harifu Apart. B-208**
**1-9-23 Fujigatani Kugenuma**
**Fujisawa-shi, Kanagawa-ken(JP)**
Inventor: **Watanabe, Shinpei**
**1566-305 Naracho Midori-ku**
**Yokohama-shi Kanagawa-ken(JP)**

(74) Representative: **Herzog, Friedrich Joachim, Dipl.-Ing.**
**IBM Deutschland GmbH Schönaicher Strasse 220**
**W-7030 Böblingen(DE)**

EP 0 163 177 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention relates to a circuit for generating borderlines of a window for a cathode ray tube display comprising: A first circuit for generating a first signal (A) defining a horizontal extension of the window which takes a first state for a period corresponding to the desired horizontal extension of the window, and a second state for a period not corresponding to said horizontal extension of the window during a scanning period of the screen of said display, a second circuit for generating a second signal (D) defining a vertical extension of the window which takes a first state for a period corresponding to a desired vertical extension of the window, and a second state for a period not corresponding to said vertical extension of the window during a scanning period of the screen of said display.

Conventionally, the borderlines of a window in a CRT display is displayed by storing dots at locations corresponding to the borderlines in an image memory. However, this involves the problem that the capacity of the memory has to be made large.

From DE-A-3 305 710 there is known a circuit for generating a signal to define a certain desired region on a CRT-screen. Pictorial data contained in such a region is selected and analyzed. However, this circuit cannot be used to display a window borderline surrounding the desired region.

The object of the present invention is to provide a circuit for generating window borderlines for a CRT display that is capable of generating borderlines of a window with a simple hardware configuration.

In accordance with the present invention said object is advantageously solved by applying the characterizing features laid down in the independent claim.

The invention provides the advantage that with a simple hardware configuration borderlines of a window can be generated and displayed on the screen of a CRT in the width of a character box or a dot.

Following the invention is described in detail in connection with an example shown in the drawing, in which

Figs. 1 and 2    are block diagrams showing the window borderline generating circuit according to the invention;

Fig. 3    is an illustration showing the window borderlines displayed on the CRT screen according to the invention;

Fig. 4    is a diagram showing waveforms at various points in the circuit of Fig. 1; and

Fig. 5    is a diagram showing waveforms at various points in the circuit of Fig. 2.

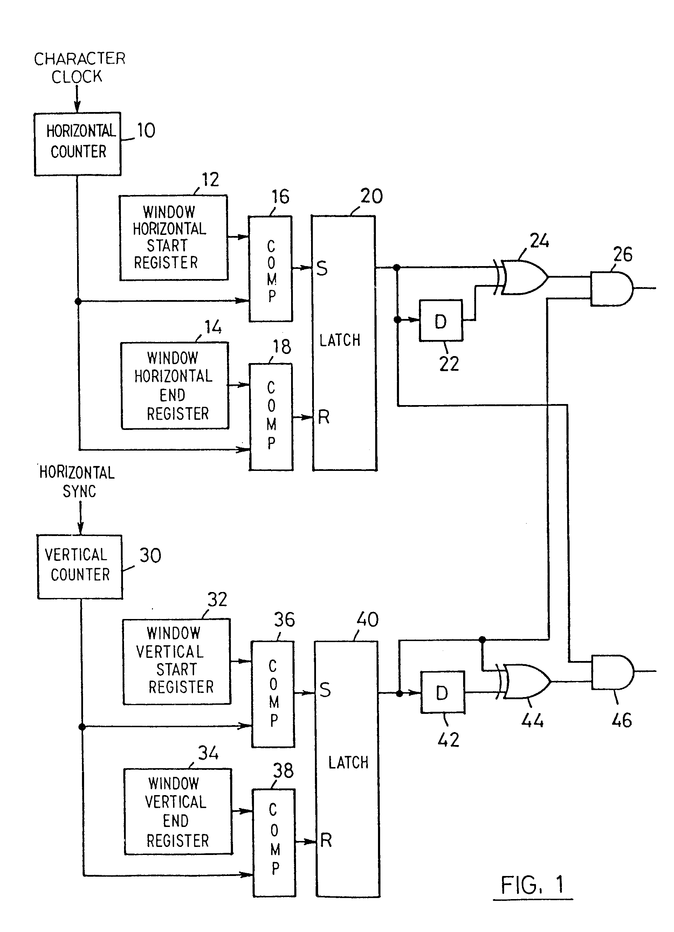

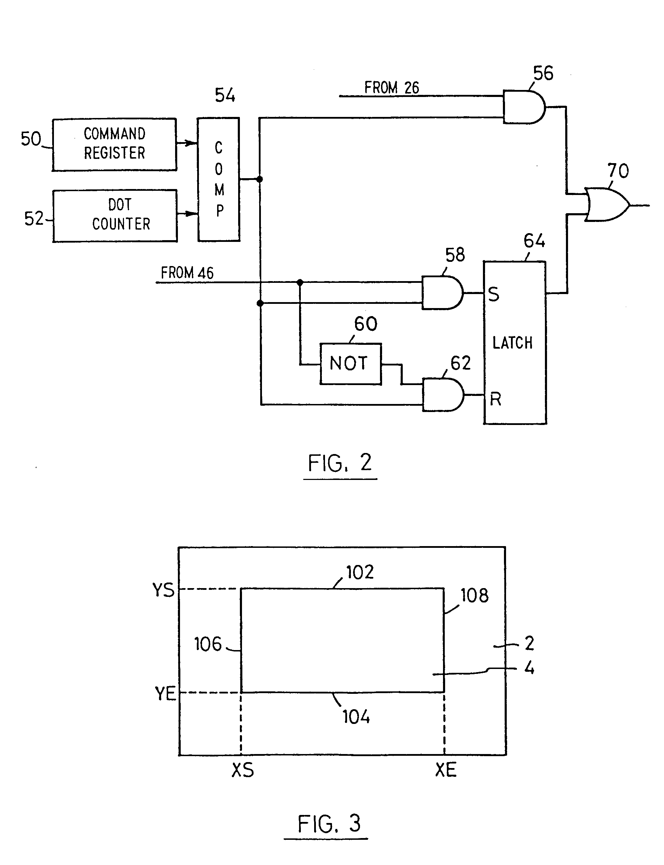

Figs. 1 and 2 show the preferred embodiment of the circuit for generating the window borderlines for the CRT display according to the invention. This circuit generates horizontal borderlines 102 and 104 of a window 4 on a CRT display screen 2, as well as vertical borderlines 106 and 108, as for example shown in Fig. 3. In Fig. 1, a horizontal counter 10 counts the number of characters for one line on the screen in response to a character clock signal, and indicates a horizontal location of a scanning line. A window region horizontal start point register 12 stores a signal indicating a horizontal start point XS (see Fig. 3) of the window 4. This signal is, for example, supplied from a microprocessor. A comparator 16 compares the count of the horizontal counter 10 and the content of the window region horizontal start point register 12, and supplies a high level signal to a set terminal S of latch 20 when both are coincident. A window region horizontal end point register 14 stores a signal indicating a horizontal end point XE (see Fig. 3) of the window 4. This signal is also, for example, supplied from a microprocessor. A comparator 18 compares the count of the horizontal counter 10 and the content of the window region horizontal end point register 14, and supplies a high level signal to a reset terminal R of the latch 20 when both are coincident. The latch 20 starts to generate a high level signal when the set terminal S is supplied with the high level signal, and stops to generate the high level signal when the reset terminal R is supplied with the high level signal. A delay circuit 22 delays an output signal of the latch 20 by a period of one character cycle. An exclusive OR gate 24 exclusive-ORs the output signal of the latch 20 and the output signal of the delay circuit 22.

A vertical counter 30 increments its count each time when it receives a horizontal synchronizing signal, and indicates a vertical location of a scanning line. A window region vertical start point register 32 stores a signal indicating a vertical start point YS (see Fig. 3) of the window 4. This signal is, for example, supplied from a microprocessor. A comparator 36 compares the count of the vertical counter 30 and the content of the window region start point register 32, and supplies a high level signal to a set terminal S of latch 40 when both are coincident. A window region vertical end point register 34 stores a signal indicating a vertical end point YE (see Fig. 3) of the window 4. This signal is also, for example, supplied from a microprocessor. A comparator 38 compares the count of the vertical counter 30 and the content of the window region vertical end point register 34, and supplies a high level signal to a reset terminal R of the latch 40 when both are coincident. The latch 40 starts to generate a high level signal when its set terminal S is supplied with the high level signal, and stops to generate the high level signal when its reset terminal R is supplied with the high level signal. A delay circuit 42 delays an output signal of the latch 40 by one horizontal scanning period. An exclusive OR gate 44 exclusive-ORs the output signal of the latch 40 and an output signal of the delay circuit 42. An AND gate 26 outputs a signal ANDing an output of the exclusive OR gate 24 and the output of the latch 40, while an AND gate 46 outputs a signal ANDing an output of the exclusive OR gate 44 and the output of the latch 20.

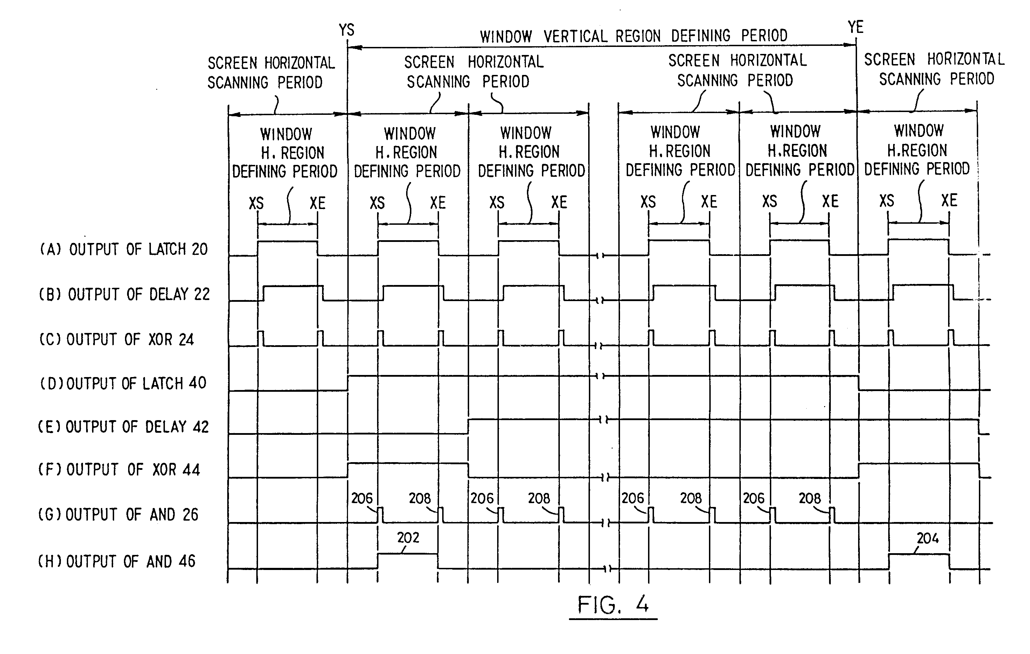

Fig. 4 shows waveforms at various points in the circuit of Fig. 1. Now referring to Fig. 4, operation of the circuit in Fig. 1 is described. The latch 20 generates the high level signal from the time when the output signal of the horizontal counter 10 is coincident with the window horizontal start point XS stored in the register 12, to the time when it is coincident with the window horizontal end point XE stored on the register 14. Therefore, the latch 20 generates a signal defining a horizontal region of the window (see Fig 4(A)). Because the delay circuit 22 delays the output signal of the latch 20 by a period of one character cycle, the exclusive OR gate 24 generates high level signals from each of the horizontal start point XS and the end point XE of the window for a duration of one character cycle.

The latch 40 generates a high level signal from the time when the output signal of the vertical counter 30 is coincident with the window vertical start point YS stored in the register 32, to the time when it is coincident with the window vertical end point YE stored in the register 34. Therefore, the latch 40 generates a signal specifying a vertical region of the window (see Fig. 4(D)). Because the delay circuit 42 delays the output signal of the latch 40 by one horizontal scanning period, the exclusive OR gate 44 generates high level signals from each of the vertical start point YS and the end point YE of the window for a duration of one horizontal scanning period.

The AND gate 26 selects only those pulses included in the vertical region of the window from pulses of one character cycle from the horizontal start point XS and the end point XE that are generated for any of horizontal scanning period, by ANDing the output signal of the exclusive OR gate 24 and the signal defining the vertical region of the window generated from the latch 40. Thus, output pulses 206 and 208 of the AND gate 26 (see Fig. 4(G)) correspond to vertical lines 106 and 108 of the window 4 (see Fig. 3), respectively.

The AND gate 46 takes out only portions included in the horizontal region of the window from a pulse covering entirely one horizontal scanning interval by ANDing the output of the exclusive OR gate 44 and the signal defining the horizontal region of the window generated from the latch 20. Thus, output pulses 202 and 204 of the AND gate 46 (see Fig. 4(H)) correspond to horizontal lines 102 and 104 of the window 4 (see Fig. 3), respectively.

Since the output pulse of the AND gate 26 has a width of one character, if the CRT is directly driven by this pulse, a vertical line with a width of one character is drawn. In cases where it is too thick and inconvenient a circuit is used that is shown in Fig. 2. In Fig. 2, a command register 50 stores a horizontal dot location in a character requiring generation of a borderline, and, for example, stores the fourth dot location (any dot location can be stored and not restricted to this example). A dot counter 52 counts the number of dots to the horizontal dot location in response to a dot clock. A comparator 54 generates a high level signal when the content of the command register 50 is coincident with the count of the counter 52. An AND gate 56 ANDs the output signal of the AND gate 26 of Fig. 1 and the output signal of the comparator 54. A NOT circuit 60 reverses the output of the AND gate 46. A latch 64 generates a high level signal from the time when a high level signal is supplied to a set terminal S from the AND gate 58, to the time when a high level signal is supplied to a reset terminal R from the AND gate 62. An OR gate 70 ORs the output signal of the AND gate 56 and the output signal of the latch 64.

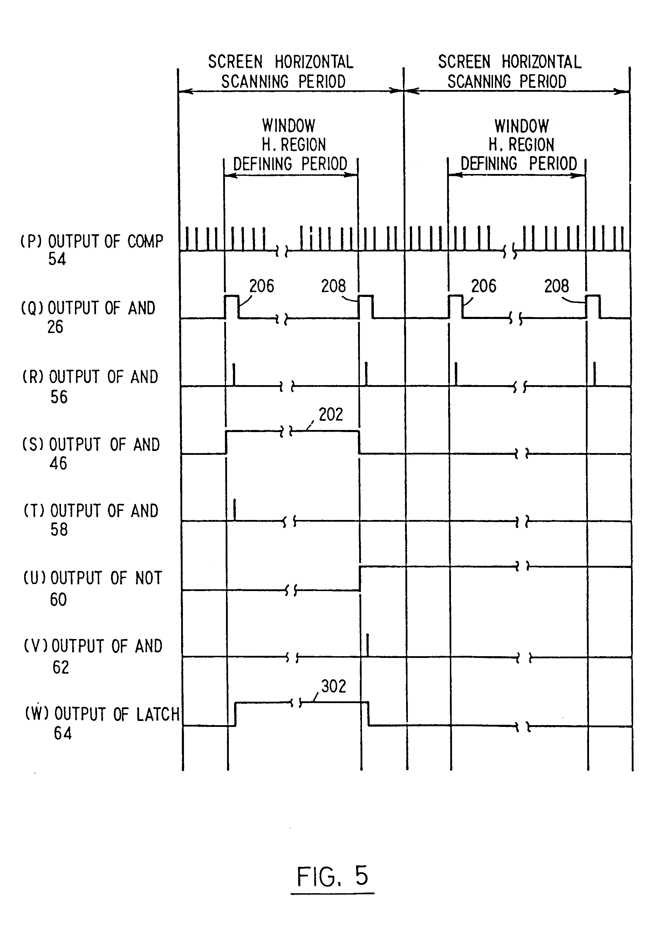

Fig. 5 shows waveforms at various parts of the circuit shown in Fig. 2. Now referring to Fig. 5, operation of the circuit of Fig. 2 is described. Now it is assumed that the fourth dot location in the horizontal direction of a character is stored in the command register 50. The comparator 54 generates a high level signal at locations corresponding to the fourth dot location in horizontal direction of the character for the entire scanning interval (see Fig. 5(P)). Therefore, the AND gate 56 can extract pulses corresponding to the fourth dot location (see Fig. 5(R)) from the pulses 206 and 208 with one character width. Thus, the AND gate 56 thins the vertical line with one character width to that with one dot width.

The AND gate 58 generates a pulse at a time delayed by four bits from the start point of the output pulse 202 of the AND gate 46, while the AND gate 62 generates a pulse at a time delayed for four bits from the end point of the output pulse 202 of the AND gate 46. Therefore, the latch 64 generates a pulse 302 of which start and end points are delayed by a time for four bits from the start and the end points of the pulse 202, respectively (see Fig. 5(W)). Thus, the latch 64 aligns the start and the end points of a horizontal line with the location of the vertical lines. An OR gate 70 combines the output signal of the AND gate 56 that defines driving duration for the CRT for displaying the vertical lines 106 and 108 with the output signal of the latch 64 that defines driving duration for the CRT for displaying the horizontal lines 102 and 104, and supplies it to the CRT. Therefore, the borderlines of a window can be displayed by causing the CRT to be luminous only when the output signal of the OR gate 70 is at high level.

As clearly understood from the above, this invention allows to display the borderlines of a window on the CRT display with a simple hardware configuration.

## Claims

1. A circuit for generating borderlines of a window for a cathode ray tube display comprising:

   a first circuit for generating a first signal (A) defining a horizontal extension of the window which takes a first state for a period corresponding to the desired horizontal extension of the window, and a second state for a period not corresponding to said horizontal extension of the window during a scanning period of the screen of said display,

   a second circuit for generating a second signal (D) defining a vertical extension of the window which takes a first state for a period corresponding to a desired vertical extension of the window, and a second state for a period not corresponding to said vertical extension of the window during a scanning period of the screen of said display;

   characterized by

   a first delay circuit (22) for delaying said first signal (A) defining the horizontal extension of the window;

   a first exclusive OR gate (24) for exclusive-ORing said signal (A) defining the horizontal extension of the window and the output (B) of said first delay circuit (22),

   a second delay circuit (42) for delaying said second signal (D) defining the vertical extension of the window,

   a second exclusive OR gate (44) for exclusive-ORing said signal (D) defining the vertical extension of the window and the output (E) of said second delay circuit (42),

   the borderlines of the window being generated by using the output (C) of said first exclusive OR gate (24) and the output (F) of said second exclusive OR gate (44) as timing signals for a display device such as a CRT display.

2. A circuit for generating borderlines according to claim 1 further comprising:

   first means (26) for ANDing said output (C) of said first XOR gate and second signal (D) and

   second means (46) for ANDing said output (F) of said second XOR gate and said first signal (A).

3. Circuit as in claim 1 or 2, wherein said borderlines are displayable in the width of a character box or of a dot.

4. A circuit for generating borderlines according to claim 2 or 3 further comprising:

   means (50, 52, 54) for generating a third signal (P) defining a dot location in the horizontal direction of a character, said third signal (P) taking a first state for a period corresponding to the desired dot location, and a second state for a period not corresponding to said dot location.

5. A circuit for generating borderlines according to claim 4 further comprising means (58, 60, 62, 64) for delaying an output (H) of said second means (46) for a time interval corresponding to said dot location.

## Patentansprüche

1. Eine Schaltung zum Erzeugen von Bildfensterseitenlinien für eine Kathodenstrahlanzeigeeinrichtung,

   umfassend:

   eine erste Schaltung zur Erzeugung eines ersten Signals (A) zur Definition der horizontalen Ausdehnung des Bildfensters, welches innerhalb einer Abtastperiode des Bildschirms der Anzeigeeinrichtung während des Zeitabschnitts, der der gewünschten horizontalen Ausdehnung des Fensters entspricht, einen ersten Zustand, und während des Zeitabschnitts, der nicht der horizontalen Ausdehnung des Fensters entspricht, einen zweiten Zustand einnimmt,

eine zweite Schaltung zur Erzeugung eines zweiten Signals (D) zur Definition der vertikalen Ausdehnung des Bildfensters, welches innerhalb einer Abtastperiode des Bildschirms der Anzeige während des Zeitabschnitts, der der gewünschten vertikalen Ausdehnung des Fensters entspricht, einen ersten Zustand, und während des Zeitabschnitts, der nicht der vertikalen Ausdehnung des Fensters entspricht, einen zweiten Zustand einnimmt;

gekennzeichnet durch

eine erste Verzögerungsschaltung (22) zur Verzögerung des Signals (A), welches die horizontale Ausdehnung des Bildfensters definiert;

ein erstes Exklusiv-ODER-Gatter (24) zur Exklusiv-ODER-Verknüpfung des Signals (A), welches die horizontale Ausdehnung des Bildfensters definiert, und dem Ausgang (B) der ersten Verzögerungsschaltung (22);

eine zweite Verzögerungsschaltung (42) zur Verzögerung des Signals (D), welches die vertikale Ausdehnung des Bildfensters definiert;

ein zweites Exklusiv-ODER-Gatter (44) zur Exklusiv-ODER-Verknüpfung des Signals (D), welches die vertikale Ausdehnung des Bildfensters definiert, und dem Ausgang (E) der zweiten Verzögerungsschaltung (42),

wobei die Seitenlinien des Fensters erzeugt werden mit Hilfe des Ausgangs (C) des ersten Exklusiv-ODER-Gatters (24) und des Ausgangs (F) des zweiten Exklusiv-ODER-Gatters (44) als Taktsignale für eine Anzeige wie z. B. eine Kathodenstrahlanzeige.

2. Eine Schaltung zur Erzeugung von Seitenlinien gemäß Anspruch 1, zusätzlich umfassend:

ein erstes Glied (26) zur UND-Verknüpfung des Ausgangs (C) des ersten Exklusiv-ODER-Gatters und dem zweiten Signal (D), und

ein zweites Glied (46) zur UND-Verknüpfung des Ausgangs (F) des zweiten Exklusiv-ODER-Gatters und dem ersten Signal (A).

3. Eine Schaltung gemäß Anspruch 1 oder 2, wobei die Seitenlinien in der Breite eines Zeichenrahmens oder eines Punktes angezeigt werden können.

4. Eine Schaltung zur Erzeugung von Seitenlinien gemäß Anspruch 2 oder 3, zusätzlich umfassend:

Glieder (50, 52, 54) zur Erzeugung eines dritten Signals (P), welches in der horizontalen Richtung eines Zeichens eine Punktposition definiert, wobei dieses dritte Signal (P) während eines Zeitabschnitts, der der gewünschten Position des Punktes entspricht, einen ersten Zustand, und während eines Zeitabschnitts, der der gewünschten Position des Punktes nicht entspricht, einen zweiten Zustand einnimmt.

5. Eine Schaltung zur Erzeugung von Seitenlinien gemäß Anspruch 4, welche zusätzliche Glieder (58, 60, 62, 64) umfaßt, um einen Ausgang (H) des zweiten Gliedes (46) während eines Zeitintervalls, welches der Punktposition entspricht, zu verzögern.

**Revendications**

1. Circuit de génération de lignes de bord d'une fenêtre pour un affichage à tube à rayons cathodiques TRC, comprenant :

un premier circuit pour engendrer un premier signal (A) définissant une étendue horizontale de la fenêtre, qui prend un premier état pendant une durée correspondant à l'étendue horizontale désirée de la fenêtre, et un deuxième état pendant une durée ne correspondant pas à ladite étendue horizontale de la fenêtre au cours d'une période de balayage de l'écran dudit affichage,

un deuxième circuit pour engendrer un deuxième signal (D) définissant une étendue verticale de la fenêtre qui prend un premier état pendant une durée correspondant à une étendue verticale désirée de la fenêtre, et un deuxième état pendant une durée ne correspondant pas à ladite étendue verticale de la fenêtre au cours d'une période de balayage de l'écran dudit affichage ; caractérisé par

un premier circuit de temporisation (22) pour retarder ledit premier signal (A) définissant l'étendue horizontale de la fenêtre ;

une première porte OU exclusif (24) pour effectuer la combinaison OU exclusif dudit signal (A) définissant l'étendue horizontale de la fenêtre et de la sortie (B) dudit premier circuit de temporisation (22);

un deuxième circuit de temporisation (42) pour retarder ledit deuxième signal (D) définissant l'étendue verticale de la fenêtre ;;

une deuxième porte OU exclusif (44) pour effectuer la combinaison OU exclusif dudit signal (D) définissant l'étendue verticale de la fenêtre et de la sortie (E) dudit deuxième circuit de temporisation (42) ;

les lignes de bord de la fenêtre étant engendrées par utilisation de la sortie (C) de ladite première porte OU exclusif (24) et de la sortie (F) de ladite deuxième porte OU exclusif (44) comme signaux de synchronisation pour un dispositif d'affichage tel qu'un affichage à tube à rayons cathodiques.

2. Circuit de génération de lignes de bord suivant la revendication 1, comprenant en outre

des premiers moyens (26) pour effectuer la combinaison logique ET de ladite sortie (C) de ladite première porte OU exclusif et du deuxième signal (D) ; et

des deuxièmes moyens (46) pour effectuer la combinaison logique ET de ladite sortie (F) de la dite deuxième porte OU exclusif et dudit premier signal (A).

3. Circuit suivant la revendication 1 ou 2, dans lequel lesdites lignes de bord sont affichables à la largeur d'une case de caractère ou d'un point.

4. Circuit de génération de lignes de bord suivant la revendication 2 ou 3, comprenant en outre :

des moyens (50,52,54) pour engendrer un troisième signal (P) définissant un emplacement de point dans la direction horizontale d'un caractère, ledit troisième signal (P) prenant un premier état pendant une durée correspondant à l'emplacement de point désiré, et un deuxième état pendant une période ne correspondant pas audit emplacement de point.

5. Circuit de génération de lignes de bord suivant la revendication 45, comprenant en outre des moyens (58,60,62,64) pour retarder une sortie (H) desdits deuxièmes moyens (46) pendant un intervalle de temps correspondant audit emplacement de point.

FIG. 1

FIG. 2

FIG. 3

FIG. 4

EP 0 163 177 B1

FIG. 5